**Europäisches Patentamt**

**European Patent Office**

**Office européen des brevets**

(19)

(11) Veröffentlichungsnummer : **0 216 229**
**B1**

(12) **EUROPÄISCHE PATENTSCHRIFT**

(45) Veröffentlichungstag der Patentschrift :
13.12.89

(21) Anmeldenummer : 86112325.5

(22) Anmeldetag : 05.09.86

(51) Int. Cl.⁴ : $C\ 01\ B\ 31/10$

(54) **Verfahren zur Herstellung von Aktivkohle.**

(30) Priorität : 19.09.85 DD 280774

(43) Veröffentlichungstag der Anmeldung :
01.04.87 Patentblatt 87/14

(45) Bekanntmachung des Hinweises auf die Patenterteilung : 13.12.89 Patentblatt 89/50

(84) Benannte Vertragsstaaten :
AT BE FR IT NL SE

(56) Entgegenhaltungen :
US–A– 3 708 888
US–A– 4 230 602

(73) Patentinhaber : Technische Universität Dresden
Mommsenstrasse 13
DDR-8027 Dresden (DD)

(72) Erfinder : Wienhaus, Otto, Dr.sc.nat.,Dr.rer.nat., Dipl.-F.
Pienner Strasse 36
DDR-8223 Tharandt (DD)
Erfinder : Klose, Erhard, Prof., Dr.-Ing., Dipl.-Ing.
Joliot-Curie-Strasse 21
DDR-9200 Freiberg (DD)
Erfinder : Born, Manfred, Dr.sc.techn., Dr.-Ing. Dipl.-Ing.
Lange Strasse 41
DDR-9200 Freiberg (DD)
Erfinder : Hennig, Friedhelm, Dipl.-Ing. oec.
Am Hammergraben 8
DDR-7520 Peitz (DD)
Erfinder : Blossfeld, Otfried, Doz. Dr.rer.sllv., Dipl.-Fors.
Schillerstrasse 3
DDR-8223 Tharandt (DD)
Erfinder : Seidel, Hans, Dr.rer.nat.,Dipl.-Chem.
Karl-Liebknecht-Strasse 3
DDR-1832 Premnitz (DD)

Erfinder : **Riedel, Dietrich, Dipl.-Chem.**
**Friedrich-Wolf-Strasse 4**
**DDR-1832 Premnitz (DD)**
Erfinder : **Fischer, Friedrich, Prof.em., Dr.rer.nat.habil**
**Dorfhainer Strasse 6**
**DDR-8217 Kurort Hartha (DD)**
Erfinder : **Zimmer, Jörg, Dr.-Ing., Dipl.-Ing.**
**Edgar-André-Strasse 23**
**DDR-8017 Dresden (DD)**
Erfinder : **Heidrich, Matthias, Dr.-Ing., Dipl.-Ing.**
**Am Grüngürtel 1**
**DDR-8021 Dresden (DD)**
Erfinder : **Lötzsch, Peter, Prof.Dr.sc.tech.Dr.-Ing.,**
**Dipl.-I.**
**Pestitzer Weg 8**
**DDR-8020 Dresden (DD)**

(74) Vertreter : **Lehn, Werner, Dipl.-Ing. et al**
**Hoffmann, Eitle & Partner Patentanwälte Arabellas-**
**trasse 4**
**D-8000 München 81 (DE)**

## Beschreibung

Die Erfindung betrifft ein Verfahren zur Herstellung von Aktivkohle durch thermische Aktivierung aus vorzugsweise waldfrischem Hackgut beziehungsweise mit und ohne Bindemittel preßverdichtetem Lignocellulosematerial — wie zum Beispiel Torf —, Sägespänepellets- sowie deren Verkokungsprodukten in einem Schachtofen im kontinuierlichen, einstufigen Prozeß.

Aktivkohle wird traditionell durch chemische Aktivierung von meist unverkohlten Rohstoffen wie Sägespänen, Torf, u. a. oder durch thermische Aktivierung von verkohlten Rohstoffen wie Holzkohle, Torfkohle, Braunkohlenschwelkoks u. a. hergestellt.

Bei einem bekannten Verfahren zur Herstellung von Pulverkohle wird Braunkohlenhochtemperaturkoks in einen Drehrohrofen aufgegeben und dabei mit geringen Mengen einer Kaliumcarbonatlösung vermischt. Im Gleichstrom zum Feststoff werden Generatorgas, Luft und Wasser eingeleitet. Beim langsamen Durchlauf wird der Koks bei Temperaturen von 920 bis 970 °C aktiviert. Das Abgas verläßt den Schornstein mit einer Temperatur von 880 bis 900 °C. Das Aktivat wird nach Zwischenlagerung einer zeit- und kostenaufwendigen Wäsche unterzogen, getrocknet und weiter aufbereitet.

Nach SU-EB 116 076 wird die Holzkohle kontinuierlich in einen Schachtofen aufgegeben und durchwandert ihn von oben nach unten. Heißgas, Luft und Wasserdampf strömen den Feststoffen entgegen. In der speziellen Ausführung dieser Erfindungsbeschreibung wird ein Teil der Abgase mit einer Gaswäsche gereinigt, in einer Brennkammer erhitzt und wieder in den Schachtofen geleitet. Außerdem wird in Brennern, die in mehreren Etagen ringförmig um die Aktivierungszone angeordnet sind, mittels ejektorartig eingeleiteter Luft Prozeßgas aus dem Ofen gezogen und in dem Ofen verbrannt. Wie üblich wird von unten Wasserdampf in den Ofen eingeleitet.

Diese und viele andere Verfahren zur Herstellung von Aktivkohle durch thermische Aktivierung sind zweistufig, d. h. zunächst wird die Holzkohle bzw. der Koks hergestellt und danach die Aktivierung durchgeführt. Das bedeutet, daß die Herstellung in einer Anlage entweder nur satzweise mit jeweiliger Neueinstellung der Parameter durchgeführt werden kann oder im kontinuierlichen Prozeß auf zwei verschiedenen Anlagen mit entsprechender Zwischenlagerung, Transport und in aller Regel vollständigem Neuaufheizen erfolgen muß. Der Aufwand für den Transport und der Energieverlust sind erheblich.

Nach DE-OS 30 22 911 ist ein einstufiges, kontinuierliches Verfahren zur Herstellung von Aktivkohle aus kohlenstoffhaltigen Produkten, darunter z. B. Kiefernspänen, in einem Schachtofen durch thermische Aktivierung bekannt.

Der Schachtofen hat die typischen Abmessungen von Höhe zu Durchmesser von etwa 2 : 1. Der zerkleinerte Feststoff wird getrocknet und über eine Schleuse in den Schachtofen aufgegeben. Er durchwandert nacheinander eine Trocknungs-, Pyrolyse-, primäre Aktivierungs-, sekundäre Aktivierungs-, eine Vorentlerungs- und eine Entleerungszone. In die sekundäre Aktivierungszone wird wie üblich der Wasserdampf eingeleitet. In die primäre Aktivierungszone wird in mehreren Niveaus Luft in signifikant verschiedenen Mengen bzw. Durchsätzen oder Geschwindigkeiten eingeleitet. Die Niveaus werden unabhängig voneinander gesteuert, um auf diese Weise in der primären Zone im wesentlichen isothermie Bedingungen zu erzeugen, so daß das Material in dieser Zone eine im wesentlichen gleichmäßige Temperatur von 760 bis etwa 1 150 °C, vorzugsweise 870 bis 980 °C bzw. im Ausführungsbeispiel 980 °C aufweist. Die Gesamtluftmenge ist so bemessen, daß alle in der primären Aktivierungszone gebildeten gasförmigen Reaktionsprodukte oxidiert werden. Dadurch wird der Kohleabbrand minimiert.

Nach diesem Verfahren wird eine Aktivkohle mit einer spezifischen Oberfläche von mindestens 400 m²/g und vorzugsweise von 600 bis 900 m²/g hergestellt.

Die Schachtofenabgase werden nach ihrer Reinigung in einer Gaswäsche teilweise zusammen mit Luft in einer Brennkammer zur Erzeugung der heißen Trocknungsgase abgezogen. Der Rest wird energetisch anderweitig verwertst.

Der Vorteil des Verfahrens besteht darin, daß kontinuierlich im einstufigen Verfahren direkt aus z. B. Holz gute Aktivkohle mit einer relativ hohen spezifischen Oberfläche hergestellt werden kann. Besondere Probleme bereitet allerdings die Luftzuführung in die primäre Aktivierungszone. Die Luftzufuhr muß spezifisch für jede Ebene genau geregelt werden, andernfalls entsteht entweder kein Aktivat oder zu viel Abbrand. Letztlich begrenzt dieser Verfahrensteil auch die Herstellung einer noch höherwertigeren Aktivkohle, d. h. einer Aktivkohle mit einer noch höheren spezifischen Oberfläche bei einer gerade noch vertretbaren vernünftigen Ausbeute. Die Kompliziertheit dieses Verfahrensschrittes zeigt im übrigen sehr deutlich, welche Schwierigkeiten beim Übergang vom traditionellen zweistufigen Verfahren der thermischen Aktivierung zum einstufigen Verfahren zu lösen sind.

Die Lufteinleitungsrohe werden wassergekühlt (zusätzliche Energieverluste). Sie behindern den Durchgang des Feststoffes. Er muß stark zerkleinert aufgegeben werden, wodurch zusätzliche Abscheider im Prozeß erforderlich sind. Außerdem arbeitet das Verfahren nur mit einer Vortrocknungsstufe.

Ziel der Erfindung ist es, hochwertige Aktivkohle im einstufigen, kontinuierlichen Verfahren aus vorzugsweise waldfrischem Hackgut beziehungsweise mit und ohne Bindemittel preßverdichtetem Lignocellulosematerial — wie zum Beispiel Torf —, Sägespänepellets- sowie deren Verkokungsprodukten herzustellen.

Aufgabe der Erfindung ist es, das Verfahren zur Herstellung von Aktivkohle in einem Schachtofen im kontinuierlichen Prozeß so zu verändern, daß der Prozeß steuerbar ist, gute Ausbeuten an hochwertiger Aktivkohle erreicht werden sowie die Anlage flexibel verschiedenen Produktionsaufgaben und ohne Zusatzeinrichtungen an Forderungen des Umweltschutzes angepaßt werden kann.

Erfindungsgemäß wird die Aufgabe dadurch gelöst, daß wenigstens ein Teil der Abgase aus dem Schachtofen zu einem feuchten Heißgas, das maximal 0,5 Vol.-% Sauerstoff und etwa 1 Vol.-% Kohlenmonoxid enthält und eine um 10 bis 30 °C über der Temperatur in der Aktivierungszone liegende Temperatur aufweist, verbrannt und mit einer Geschwindigkeit von 0,1 bis 0,6 m/s (bezogen auf den leeren Reaktor) in die Ebene unter der Aktivierungszone eingeleitet wird.

Im Gegensatz zu bisherigen Verfahren, bei denen Heißgas, Luft und Wasserdampf mehr oder weniger getrennt nebeneinander in den Ofen eingeleitet wurden, wird erfindungsgemäß in der Brennkammer ein Prozeßgas hergestellt, das allein zur Aktivierung verwendet wird. Dadurch wird eine die Ausbeute vermindernde Verbrennung des festen Kohlenstoffmaterials mit Luftsauerstoff im Schachtofen vermieden. Insgesamt wird die Steuerung des Prozesses wesentlich vereinfacht. Der Prozeß kann den Eigenschaften des Einsatzmaterials und der geforderten Produktqualität besser angepaßt werden.

In einer vorzugsweisen Ausführung werden alle Ofenabgase vollständig in der Brennkammer verbrannt. 25 bis 65 % des hergestellten wasserdampfhaltigen Heißgases wird dann dem Ofen zugeführt. Das restliche Heißgas wird energetisch weiter verwendet, z. B. zur Vorwärmung der Luft vor der Brennkammer und/oder zur Warmwasserbereitung.

Dadurch werden die brennstoffreichen Reaktionsprodukte aus der Aktivierungs- und der Pyrolysezone des Ofens energetisch vollständig genutzt und bei vollständiger Verbrennung in der Brennkammer von umweltbelastenden Schadstoffen wesentlich befreit, ohne daß hierfür zusätzliche Einrichtungen, wie z. B. Nachverbrennungsanlagen erforderlich sind.

Es ist möglich, vor der vollständigen Verbrennung der Ofenabgase wenigstens einen Teil des stoffwirtschaftlich wertvollen Holzteers abzuscheiden und dafür die Stützfeuerung der Brennkammer mit einem stoffwirtschaftlich weniger wertvollen Brennstoff zu betreiben.

Die Temperatur der Ofenabgase sollte über 120 °C liegen, um eine Kondensation des Wasserdampfes zu vermeiden. Andererseits ist es zur Gewinnung hochwertiger Holzteerfraktionen vorteilhaft, die Ofenabgastemperatur bei 80 bis 100 °C zu halten.

Bei der Verarbeitung sehr trockenen Holzes, z. B. alter Bahnschwellen, muß Wasser in das Heißgas oder an anderer Stelle des Gaskreislaufes eingespritzt werden. In allen anderen Fällen hat es sich gezeigt, daß der Wassergehalt des Holzes genügt, um ein für die Aktivierung ausreichend wasserdampfhaltiges Heißgas in der Brennkammer herzustellen.

Das Verfahren kann in einem Schachtofen mit einem kegelförmigen Drehrost durchgeführt werden. In dem nach oben gewölbten Kegel befinden sich über die Fläche verteilt mehrere Öffnungen zum Einströmen des wasserdampfhaltigen Heißgases. Weitere Einbauten sind zwischen der Einlaßschleuse und dem Austragskegel nicht erforderlich. Das bedeutet, daß die Stückgröße des Hackgutes größer bemessen werden kann. Außerdem entsteht dadurch der Vorteil, daß alle Stoffwandlungsverfahren, die in derartigen Schachtöfen durchgeführt werden können, wie z. B. die Herstellung von Holzkohle, bei einer zeitweiligen Änderung der Nachfrage durch kurzfristige Umstellung von Temperatur und Zusammensetzung des Gases sowie der Strömungsgeschwindigkeit realisiert werden können.

Nach dem Verfahren wurde Aktivat mit einer spezifischen Oberfläche von mindestens 600 m²/g und vorzugsweise von 800 bis 1 200 m²/g hergestellt. Das Aktivat hatte einen so geringen Aschegehalt, daß es ohne Wäsche zu standardgerechter Pulveraktivkohle aufbereitet werden konnte.

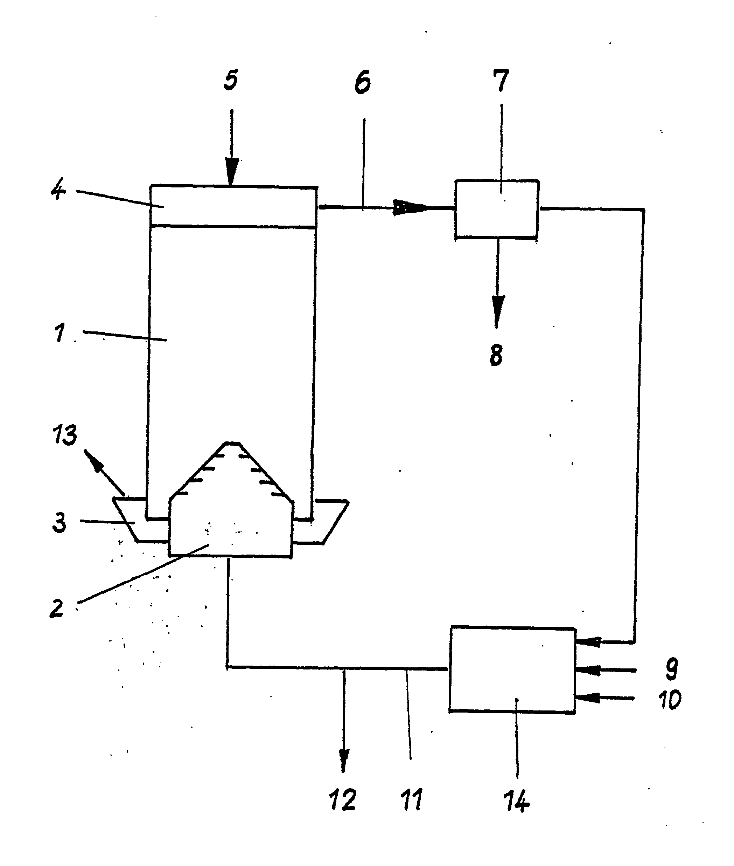

In der Zeichnung ist eine Anlage zur erfindungsgemäßen Durchführung des Verfahrens dargestellt.

Der Schachtofen 1 hat ein Verhältnis von Höhe zu Durchmesser (gemessen an seinem inneren Reaktionsraum) von etwa 2 : 1. Im unteren Teil befindet sich ein drehbarer Kegelrost 2. Sein nach oben gewölbter Kegel weist eine Vielzahl von Öffnungen zum Einströmen des Prozeßgases auf. Für den Austrag der Aktivkohle 13 ist eine Wasserschüssel 3 und eine Förderschnecke (nicht dargestellt) vorgesehen. Im Kopf des Schachtofens befindet sich eine Schleuse 4 für die Beschickung mit Kiefernhackgut 5. Das Kiefernhackgut hatte eine Stückgröße bis zu 60 mm und eine Feuchtigkeit von etwa 50 %. Im Kopf des Schachtofens werden die Ofenabgase 6 abgezogen. Sie haben eine Temperatur von 80 bis 120 °C. Auf dem Weg der Abgase zur Brennkammer 14 ist ein Lüfter und ein Zyklon zwischengeschaltet. Er beschleunigt den Abgasstrom. An seinen Flügeln und im Zyklon wird ca. 50 % des Holzteeres 8 abgeschieden. Der restliche Teil des Abgases wird der Brennkammer vollständig zugeführt und in ihr verbrannt. Hierzu wird in die Brennkammer Luft 9 eingeblasen und Brennstoff 10 für die Stützfeuerung zugeführt. Das wasserdampfhaltige Heißgas 11 verläßt die Brennkammer. Es hat eine Temperatur von ca. 870 °C, einen Sauerstoffgehalt von ca. 0,3 Vol.-% und einen Kohlenmonoxidgehalt von etwa 1 Vol.-%. 35-45 % des wasserdampfhaltigen Heißgases werden durch den Kegelrost 2 in die Ebene unterhalb der Aktivierungszone geleitet. Der Rest 12 wird anderweitig energetisch verwertet. Das Aktivat hatte eine spez. Oberfläche von 900 m²/g, einen Methylenblauadsorptionswert von 9,6 ml/100 mg, einen Melassewert von 420 mg, eine Jodadsorption von 655 mg/l und einen Aschegehalt von ca. 8,5 %.

Für die Herstellung von Holzkohle wurde der gleiche Schachtofen wie im o. g. Beispiel verwendet. Mit Hilfe der Schleuse 4 wurde in den Reaktor 5 Hackgut und/oder Holzabschnitte eingebracht. Die Abschnitte hatten maximale Kantenlänge von ca. 25 cm.

Die Feuchtigkeit des Einsatzgutes betrug 10 bis 50 %. Die Abführung der Ofengase 6 erfolgte in der gleichen Weise wie oben. Bei geringer Feuchte stieg die Abgastemperatur bis auf 250 °C an. Zur Kondensation des Teeres ist dann eine Gaskühlung mit Wasser erforderlich (nicht dargestellt). Durch diese Temperaturregulierung erfolgt die Teerabscheidung 8 wie im obigen Beispiel. In der Brennkammer 14 werden die restteerhaltigen Abgase mit Luft 9 verbrannt. Die Brennkammertemperatur beträgt 800 bis 850 °C, sie muß durch direkte oder indirekte Kühlung (nicht dargestellt) auf ca. 650 °C vor Eintritt in den Reaktor reguliert werden. Durch Veränderung der Luftzufuhr in die Brennkammer kann eine Einstellung des Sauerstoffgehaltes im Heißgas erfolgen, die eine Regulierung der Reaktortemperatur ermöglicht. Durch einen geringen Sauerstoffgehalt im Heißgas von ca. 0,5 % wurde die Ausbeute an Holzkohle hoch und deren Aschegahalt gering gehalten.

Die erhaltene Holzkohle war je nach Einsatzgut kleinstückig/pulvrig oder grobstückig. Ihr Anteil an flüchtigen Bestandteilen betrug 6 bis 8 %. Der Aschegehalt lag bei ca. 2 %.

Bezugszeichen

  1 Schachtofen
  2 Kegelrost
  3 Wasserschüssel
  4 Schleuse
  5 Kiefernhackgut
  6 Ofenabgase
  7 Lüfter und Zyklon
  8 Holzteer
  9 Luft
  10 Brennstoff
  11 wasserdampfhaltiges Heißgas
  12 aus dem Kreislauf ausgeschiedenes wasserdampfhaltiges Heißgas

**Patentansprüche**

1. Verfahren zur Herstellung von Aktivkohle aus vorzugsweise waldfrischem Hackgut beziehungsweise mit und ohne Bindemittel, preßverdichtetem Lignocellulosematerial — wie zum Beispiel Torf —, Sägespänepelletssowie deren Verkokungsprodukten im kontinuierlichen Prozeß in einem Schachtofen unter Verwendung einer Brennkammer, gekennzeichnet dadurch, daß in der Brennkammer durch Verbrennung wenigstens eines Teils der Ofenabgase ein wasserdampfhaltiges Heißgas mit maximal 0,5 Vol.-% Sauerstoff und etwa 1 Vol.-% Kohlenmonoxid und einer um 10 bis 30 °C über der Temperatur in der Aktivierungszone liegenden Temperatur hergestellt und in die Ebene unter der Aktivierungszone mit einer Geschwindigkeit von 0,1 bis 0,6 m/s (bezogen auf den leeren Ofen) eingeleitet wird.

2. Verfahren nach Anspruch 1, gekennzeichnet dadurch, daß die gesamten Ofenabgase in der Brennkammer verbrannt werden und 25 bis 65 % des in der Brennkammer erzeugten wasserdampfhaltigen Heißgases in den Ofen geleitet wird.

3. Verfahren nach Anspruch 2, gekennzeichnet dadurch, daß der nicht in den Ofen zurückgeführte Teil des wasserdampfhaltigen Heißgases zu energetischen Zwecken, z. B. zur Vorwärmung der Luft für die Brennkammer und zur Warmwasserbereitung, genutzt wird.

4. Verfahren nach den Ansprüchen 1 und 2, gekennzeichnet dadurch, daß in der Brennkammer aller brennbaren Bestandteile vollständig verbrannt werden.

5. Verfahren nach den Ansprüchen 1 und 2, gekennzeichnet dadurch, daß wenigstens ein Teil des Absetzteers vor der Brennkammer aus den Ofenabgasen abgeschieden wird.

6. Verfahren nach Anspruch 5, gekennzeichnet dadurch, daß die Abgastemperatur zwischen 80 und 100 °C liegt.

7. Verfahren nach Anspruch 2, gekennzeichnet dadurch, daß bei der Verarbeitung von waldfrischem Hackgut aus Nadelholz 35 bis 45 % des wasserdampfhaltigen Heißgases mit einer Temperatur von 860 bis 880 °C hergestellt und mit einer Geschwindigkeit von 0,2 bis 0,3 m/s in die Ebene unterhalt der Aktivierungszone eingeleitet werden.

8. Verfahren nach Anspruch 2, gekennzeichnet dadurch, daß bei der Verarbeitung von trockenem Hackgut, z. B. aus alten Bahnschwellen beziehungsweise mit und ohne Bindemittel preßverdichtetem Lignocellulosematerial — wie zum Beispiel Torf —, Sägespänepellets — sowie deren Verkokungsprodukten, der Brennkammer bzw. dem Abgas vor der Brennkammer Wasser zugesetzt wird.

**Claims**

1. A method for manufacturing activated carbon from preferably forest-fresh chopped material, with or without binder as the case may be compressed ligno-cellulose material — such as for example peat —, sawdust pallets, and their carbonised products in a continuous process in a shaft furnace employing a combustion chamber, characterised in that a hot water vapor-containing gas having at most 0.5 volume % oxygen and about 1 volume % carbon monoxide and a temperature lying around 10 to 30 °C above the temperature in the activation zone is manufactured in the combustion chamber by combustion of at least a portion of the exhaust gas, and is introduced at the level beneath the activation zone at a speed of 0.1 to 0.6 metres per second (with respect to the empty furnace).

2. A method according to claim 1 characterised in that the entire exhaust gas from the furnace is combusted in the combustion chamber and 25 to 65 % of the hot water vapor-containing gas produced in the combustion chamber is fed into the furnace.

3. A method according to claim 2 characterised in that the portion of the hot water vapor-containing gas which is not returned to the furnace is used for energy purposes, e. g. for pre-heating the air for the combustion chamber and for preparing hot water.

4. A method according to claims 1 and 2 characterised in that all combustable components are completely burnt in the combustion chamber.

5. A method according to claims 1 and 2 characterised in that at least a portion of the removeable tar is separated from the furnace exhaust gases before the combustion chamber.

6. A method according to claim 5 characterised in that the exhaust gas temperature lies between 80 and 100 °C.

7. A method according to claim 2 characterised in that in the processing of forest-fresh chopped material of coniferous wood, 35 to 45 % of the hot water vapor-containing gas is manufactured with a temperature of 860 to 880 °C and is introduced at the level beneath the activation zone at a speed of 0.2 to 0.3 metres per second.

8. A method according to claim 2 characterised in that in the processing of dried chopped material, for example of old railway sleepers, with or without binder as the case may be, water is added to the compressed ligno-cellulose material — such as for example peat, sawdust pellets, and their carbonised products, to the combustion chamber or to the exhaust gas before the combustion chamber.

**Revendications**

1. Procédé de fabrication de charbon actif à partir d'un produit d'exploitation forestière, de préférence à l'état frais, ou bien d'une matière à base de ligno-cellulose, compactée avec et sans liant — comme par exemple des boulettes de tourbe, des boulettes de sciure — ainsi que leurs produits de carbonisation, dans un four à fosse selon un processus continu, en utilisant une chambre de combustion, caractérisé en ce que l'on produit dans la chambre de combustion, par brûlage d'au moins une partie du gaz effluent du four, un gaz chaud contenant de la vapeur d'eau, au maximum 0,5 % en volume d'oxygène et environ 1 % en volume d'oxyde de carbone, et à une température supérieure de 10 à 30 °C à la température dans la zone d'activation et on l'introduit dans le plan situé en dessous de la zone d'activation à une vitesse de 0,1 à 0,6 m/s (rapportée au four vide).

2. Procédé selon la revendication 1, caractérisé en ce que tous les gaz affluents du four sont brûlés dans la chambre de combustion et 25 à 65 % du gaz chaud contenant de la vapeur d'eau et produit dans la chambre de combustion sont canalysés dans le four.

3. Procédé selon la revendication 2, caractérisé en ce que la partie du gaz chaud contenant de la vapeur d'eau qui n'a pas été renvoyée dans le four est exploitée à des fins énergétiques, par exemple pour un pré-chauffage de l'air pour la chambre de combustion et pour une préparation d'eau chaude.

4. Procédé selon une des revendications 1 ou 2, caractérisé en ce que les composants combustibles sont brûlés dans la chambre de combustion.

5. Procédé selon une des revendications 1 ou 2, caractérisé en ce qu'au moins une partie du goudron végétal est extrait des gaz effluents du four avant la chambre de combustion.

6. Procédé selon la revendication 5, caractérisé en ce que la température des gaz effluents est comprise entre 80 et 100 °C.

7. Procédé selon la revendication 2, caractérisé en ce que, lors de la mise en œuvre de produit forestier à l'état frais formé de bois résineux, de 35 à 45 % du gaz chaud contenant de la vapeur d'eau sont produits à une température de 860 à 880 °C et sont introduits, à une vitesse de 0,2 à 0,3 m/s, dans le plan situé en dessous de la zone d'activation.

8. Procédé selon la revendication 2, caractérisé en ce que, lors de la mise en œuvre de produit forestier sec, par exemple de traverses de chemin de fer ou bien d'une matière à base de ligno-cellulose, compactée avec et sans liant — comme par exemple des boulettes de tourbe, des boulettes de sciure — ainsi que leurs produits de carbonisation, de l'eau est introduite dans la chambre de combustion ou dans le gaz effluent avant la chambre de combustion.